# EUROPÄISCHE PATENTSCHRIFT

(11) **EP 4 504 584 B1**
(45) Veröffentlichungstag und Bekanntmachung des Hinweises auf die Patenterteilung: **01.10.2025**
(21) Anmeldenummer: 23715166.7
(22) Anmeldetag: 31.03.2023
(51) Int. Cl.: B62M 11/14, B62M 11/18, B62M 6/55, F16H 3/66

(54) **TRETLAGERGETRIEBE IN PLANETENBAUWEISE FÜR EIN FAHRRAD ODER EIN PEDELEC**
BOTTOM BRACKET TRANSMISSION WITH A PLANETARY DESIGN FOR A BICYCLE OR PEDELEC
TRANSMISSION DE JEU DE PÉDALIER CONCEPTION DE PLANÉTAIRES POUR BICYCLETTE OU VÉLO À ASSISTANCE ÉLECTRIQUE

(30) Priorität: 01.04.2022 DE 102022203240
(43) Veröffentlichungstag der Anmeldung: 12.02.2025
(73) Patentinhaber: ZF Friedrichshafen AG, 88046 Friedrichshafen (DE)
(72) Erfinder: BECK, Stefan, 88097 Eriskirch (DE); KALTENBACH, Johannes, 88048 Friedrichshafen (DE); WECHS, Michael, 88138 Weißensberg (DE); RADIC, Mladjan, 88085 Langenargen (DE); ZIEMER, Peter, 86825 Bad Woerishofen (DE); RIEDISSER, Thomas, 88138 Sigmarszell (DE)
(74) Vertreter: ZF Friedrichshafen AG
(86) Internationale Anmeldenummer: PCT/EP2023/058441
(87) Internationale Veröffentlichungsnummer: WO 2023/187149

(56) Entgegenhaltungen:
- DE-A1- 102016 225 162
- DE-A1- 102016 225 165
- DE-A1- 102016 225 169
- DE-A1- 102018 208 380
- DE-A1- 102018 208 382
- DE-A1- 102019 208 536
- DE-A1- 102020 206 299

## Beschreibung

Die vorliegende Erfindung betrifft ein Tretlagergetriebe in Planetenbauweise für ein Fahrrad oder ein Pedelec mit einer Tretkurbelwelle als Antrieb und einer Getriebeausgangswelle als Abtrieb sowie zumindest vier weiteren Wellen, mit zumindest drei Planetenradsätzen, welche koaxial zur Tretkurbelwelle angeordnet sind und mit zumindest fünf Schaltelementen zum Realisieren von zumindest sechs Gängen. Ferner betrifft die Erfindung ein Fahrrad oder Pedelec mit dem Tretlagergetriebe.

DE 10 2018 208382 A1 offenbart die Merkmale des Oberbegriffes des Anspruchs 1.

Beispielsweise aus der Druckschrift DE 10 2016 225 169 A1 ist ein Getriebe in Planetenbauweise für ein Fahrrad oder Pedelec bekannt. Das Getriebe umfasst für die Realisierung von nur vier Gängen mindestens zwei Planetenradsätze, wobei davon notwendigerweise zumindest ein Planetenradsatz als bauraumaufwendiger Plus-Planetenradsatz ausgeführt ist. Ferner sind mindestens vier Schaltelemente erforderlich. Bei einer weiteren Ausführungsvariante des Getriebes werden durch das Hinzufügen von zwei weiteren Schaltelementen und einem weiteren Planetenradsatz vier weitere Gänge realisiert. Aufgrund der vorgesehenen Verschaltung bzw. Anbindung der verschiedenen Planetenradsätze ergibt sich bei dem bekannten Getriebe eine bauraumaufwendige Ausgestaltung.

Demzufolge liegt der vorliegenden Erfindung die Aufgabe zugrunde ein Tretlagergetriebe der eingangs beschriebenen Gattung mit möglichst geringem Bauaufwand mit möglichst wenigen Bauteilen zu realisieren.

Diese Aufgabe wird erfindungsgemäß durch die Merkmale des Patentanspruches 1 bzw. 15 gelöst. Vorteilhafte und beanspruchte Weiterbildungen ergeben sich aus den Unteransprüchen und der Beschreibung sowie den Zeichnungen.

Somit wird ein Tretlagergetriebe in Planetenbauweise für ein Fahrrad oder ein Pedelec vorgeschlagen. Das Tretlagergetriebe weist eine Tretkurbelwelle als Antrieb und eine Getriebeausgangswelle als Abtrieb sowie zumindest vier weitere Wellen auf,
wobei der Abtrieb vorzugsweise über ein Kettenrad, ein Riemenrad oder dergleichen erfolgt. Ferner umfasst das Tretlagergetriebe drei Planetenradsätze, welche koaxial zur Tretkurbelwelle angeordnet sind, und fünf Schaltelemente zum Realisieren von zumindest sechs Gängen bei dem vorgeschlagenen Tretlagergetriebe. Um eine besonders effektive und bauraumgünstige Ausführung bei dem Tretlagergetriebe vorzusehen, ist die Tretkurbelwelle mit einem zweiten Element des ersten Planetenradsatzes verbunden. Ferner ist die Tretkurbelwelle über ein viertes Schaltelement und eine zweite Welle mit einem dritten Element des zweiten Planetenradsatzes verbindbar. Die Getriebeausgangswelle ist mit einem ersten Element des ersten Planetenradsatzes und mit einem ersten Element des dritten Planetenradsatzes verbunden. Ein drittes Element des ersten Planetenradsatzes ist über eine erste Welle mit einem zweiten Element des zweiten Planetenradsatzes verbunden. Ein erstes Element des zweiten Planetenradsatzes ist über eine dritte Welle mit einem zweiten Element des dritten Planetenradsatzes verbunden. Zum Verblocken des dritten Planetenradsatzes sind zwei Elemente des dritten Planetenradsatzes über ein fünftes Schaltelement miteinander verbindbar.

Auf diese Weise wird mit der vorbeschriebenen Anbindung der nur drei vorgesehenen Planetenradsätze und der nur fünf vorgesehenen Schaltelemente ein besonders einfacher und kompakter Aufbau bei dem vorgeschlagenen Tretlagergetriebe realisiert. Hinzu kommen besonders geringe Bauteilbelastungen und ein vorteilhaft hoher Verzahnungswirkungsgrad aufgrund der geometrischen Übersetzungsreihe bei dem Tretlagergetriebe.

Zur mechanischen Verbindung von Elementen der Planetenradsätze werden vorzugsweise neben Antrieb und Abtrieb nur vier weitere Wellen oder wellenartige Elemente verwendet, wobei unter dem Begriff Welle nicht ausschließlich ein zylindrisches, drehbar gelagertes Maschinenelement zur Übertragung von Drehmomenten zu verstehen ist, sondern vielmehr sind hierunter auch allgemeine Verbindungselemente zu verstehen, die die einzelnen Radsatzelemente miteinander zur Drehmomentübertragung verbinden.

Um die bauraumgünstige Anordnung bei dem vorgeschlagenen Tretlagergetriebe zu realisieren, ist vorgesehen, dass bei geschlossenem ersten Schaltelement die mit dem dritten Element des zweiten Planetenradsatzes verbundene zweite Welle mit einem Gehäuse fest verbunden ist, dass bei geschlossenem zweiten Schaltelement die mit dem ersten Element des zweiten Planetenradsatzes und mit dem zweiten Element des dritten Planetenradsatzes verbundene dritte Welle mit dem Gehäuse fest verbunden ist und dass bei geschlossenem dritten Schaltelement eine mit dem dritten Element des dritten Planetenradsatzes verbundene vierte Welle mit dem Gehäuse fest verbunden ist. Durch die vorbeschriebene gehäuseseitige Anbindung der Elemente durch die vorgesehenen Schaltelemente als Bremsen können die vorgesehenen Gänge bei sehr kompakter Bauweise des Tretlagergetriebes realisiert werden.

Im Rahmen der vorliegenden Erfindung ist bei dem vorgeschlagenen Tretlagergetriebe vorgesehen, dass das erste Schaltelement, das zweite Schaltelement und das dritte Schaltelement jeweils als formschlüssige Bremse ausgeführt sind und/oder dass das vierte Schaltelement und das fünfte Schaltelement jeweils als Freilauf ausgeführt sind.

Die als Bremsen ausgeführten Schaltelemente werden vorzugsweise als formschlüssige Schaltelemente beispielsweise als kostengünstige Schaltklauen oder dergleichen zum Beispiel mit einem verzahnten Bremsring und einer korrespondierenden Schaltklinke ausgeführt. Bremsen als Schaltelemente haben den Vorteil, dass diese zum Betätigen von außen ohne weiteres erreichbar sind. Da die vorgesehenen Freiläufe als Kupplungen eingesetzt werden, ist es von Vorteil, wenn die Bremsen z. B. als einseitig wirkende Bremsen ausgeführt sind, um ein Verblocken des Getriebes bei Drehrichtungsumkehr am Antrieb oder am Abtrieb zu verhindern.

Vorzugsweise werden als Freiläufe nicht schaltbare Freiläufe verwendet. Dies hat den Vorteil, dass keine Schaltbetätigung bei den passiven Schaltelementen erforderlich ist. Der nicht schaltbare Freilauf überträgt ein Drehmoment, wenn dieser gesperrt ist. In der entgegengesetzten Drehrichtung wird kein Drehmoment übertragen. Es ist jedoch denkbar, dass auch schaltbare Freiläufe oder auch schaltbare Freilaufbremsen eingesetzt werden.

Bei dem vorgeschlagenen Tretlagergetriebe kann zum Verblocken des dritten Planetenradsatzes vorgesehen sein, dass im Rahmen einer ersten Verblockungsvariante das erste Element des dritten Planetenradsatzes über das fünfte Schaltelement mit dem dritten Element des dritten Planetenradsatzes verbindbar ist. Ferner kann im Rahmen einer zweiten Verblockungsvariante vorgesehen sein, dass das erste Element des dritten Planetenradsatzes über das fünfte Schaltelement mit dem zweiten Element des dritten Planetenradsatzes verbindbar ist. Es kann auch im Rahmen einer dritten Verblockungsvariante vorgesehen sein, dass das zweite Element des dritten Planetenradsatzes über das fünfte Schaltelement mit dem dritten Element des dritten Planetenradsatzes verbindbar ist.

Eine bevorzugte Ausführung der Erfindung kann vorsehen, dass zumindest einer der vorgesehenen Planetenradsätze als Minus-Planetenradsatz ausgeführt ist, wodurch sich eine besonders bauraumgünstige Anordnung ergibt. Es ist auch denkbar, dass einer der Planetenradsätze als Plus-Planetenradsatz ausgeführt ist.

Ein Minus-Planetenradsatz kann bevorzugt in einen Plus-Planetenradsatz überführt werden, wenn die Planetenradträger- und Hohlradanbindung an diesem Radsatz miteinander vertauscht wird und der Betrag der Standübersetzung um 1 erhöht wird. Ein Minus-Planetenradsatz weist an seinem Planetenradträger verdrehbar gelagerte Planetenräder auf, die mit dem Sonnenrad und dem Hohlrad dieses Planetenradsatzes kämmen, sodass sich das Hohlrad bei festgehaltenem Planetenradträger und drehendem Sonnenrad in zur Sonnenraddrehrichtung entgegengesetzter Richtung dreht. Ein Plus-Planetenradsatz weist an seinem Planetenradträger verdrehbar gelagerte und miteinander in Zahneingriff stehende innere und äußere Planetenräder auf, wobei das Sonnenrad dieses Planetenradsatzes mit den inneren Planetenrädern und das Hohlrad dieses Planetenradsatzes mit den äußeren Planetenrädern kämmen, sodass sich das Hohlrad bei festgehaltenem Planetenradträger und drehendem Sonnenrad in zur Sonnenraddrehrichtung gleicher Drehrichtung dreht.

Dies bedeutet für den Fachmann, dass bei den als Minus-Planetenradsatz ausgeführten Einzelradsätzen ein erstes Element als Sonnenrad, ein zweites Element als Planetenradträger bzw. Steg und ein drittes Element als Hohlrad ausgeführt sind.

Ferner bedeutet dies, dass bei einem als Plus-Planetenradsatz ausgeführten Einzelradsatz das erste Element als Sonnenrad, das zweite Element als Hohlrad und das dritte Element als Planetenradträger bzw. Steg ausgeführt sind.

Um die Ansteuerung des vorgeschlagenen Tretlagergetriebes weiter zu optimieren, ist vorgesehen, dass zumindest ein Drehmomentsensor oder dergleichen an dem Antrieb und/oder an dem Abtrieb vorgesehen ist.

Um den Antrieb bei dem vorgeschlagenen Tretlagergetriebe elektrisch zu unterstützen, kann zumindest eine elektrische Maschine oder dergleichen mit dem Antrieb bzw. mit der Tretkurbelwelle und/oder mit dem Abtrieb bzw. mit der Getriebeausgangswelle verbunden oder verbindbar sein bzw. fest oder lösbar angekoppelt sein. Vorzugsweise kann die elektrische Maschine achsparallel zur Tretkurbelwelle angeordnet sein.

Ein weiterer Aspekt der vorliegenden Erfindung beansprucht ein Fahrrad oder Pedelec mit dem vorbeschriebenen Tretlagergetriebe. Hieraus ergeben sich die bereits beschriebenen Vorteile und weitere Vorteile.

Nachfolgend wird die vorliegende Erfindung anhand der Zeichnungen weiter erläutert.

Es zeigen:
Figur 1 eine schematische Prinzipansicht einer möglichen Ausführungsvariante eines Tretlagergetriebes in Planetenbauweise für ein Fahrrad oder Pedelec;
Figur 2 eine schematische Prinzipansicht des Tretlagergetriebes mit einer zweiten Verblockungsvariante bei einem dritten Planetenradsatz;
Figur 3 eine schematische Prinzipansicht des Tretlagergetriebes mit einer dritten Verblockungsvariante bei dem dritten Planetenradsatz;
Figur 4 eine schematische Prinzipansicht des Tretlagergetriebes gemäß Figur 1 mit einem beispielhaft als ersten Planetenradsatz ausgeführten Plus-Planetenradsatz;
Figur 5 eine schematische Prinzipansicht des Tretlagergetriebes gemäß Figur 1 mit einem beispielhaft als zweiten Planetenradsatz ausgeführten Plus-Planetenradsatz;
Figur 6 eine schematische Prinzipansicht des Tretlagergetriebes gemäß Figur 1 mit einem beispielhaft als dritten Planetenradsatz ausgeführten Plus-Planetenradsatz,
Figur 7 eine schematische Ansicht des Tretlagergetriebes gemäß Figur 1 mit einem beispielhaft angedeuteten Drehmomentsensor am Antrieb;
Figur 8 eine schematische Ansicht des Tretlagergetriebes gemäß Figur 1 mit einer beispielhaft am Antrieb angeordneten elektrischen Maschine;
Figur 9 eine schematische Ansicht des Tretlagergetriebes gemäß Figur 1 mit einer beispielhaft am Abtrieb angeordneten elektrischen Maschine; und
Figur 10 ein Schaltschema mit den schaltbaren Gänge bei dem erfindungsgemäßen Tretlagergetriebe gemäß Figuren 1 bis 9.

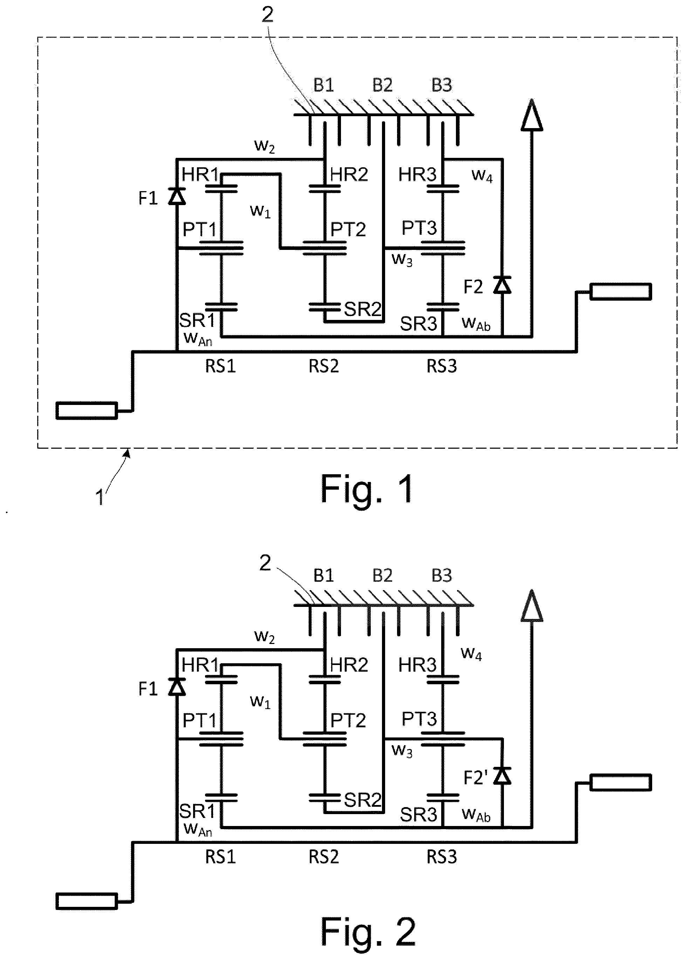

In den Figuren 1 bis 9 sind verschiedene Ausführungen anhand von schematischen Prinzipansichten eines erfindungsgemäßen Tretlagergetriebes in Planetenbauweise für ein Fahrrad oder ein Pedelec 1 lediglich beispielhaft dargestellt. Figur 1 zeigt das schematisch angedeutete Fahrrad oder Pedelec 1 mit dem Tretlagergetriebe.

Unabhängig von den Ausführungen umfasst das Tretlagergetriebe in einem Gehäuse bzw. Tretlagergehäuse 2 eine Tretkurbelwelle bzw. Tretkurbel Wan als Antrieb mit den Pedalen und eine Getriebeausgangswelle Wab als Abtrieb mit einem nicht weiter dargestellten Ketten- bzw. Riemenrad. Ferner sind vier weitere Wellen W1, W2, W3, W4 vorgesehen, die mit Elementen der drei Planetenradsätze RS1, RS2, RS3 gekoppelt bzw. verbunden sind. Die Elemente des ersten Planetenradsatzes RS1 und des zweiten Planetenradsatzes RS2 sowie des dritten Planetenradsatzes RS3 sind koaxial zur Tretkurbelwelle Wan angeordnet. Zudem sind fünf Schaltelemente B1, B2, B3, F1, F2, F2', F2" zum Realisieren von sechs Gängen V1, V2, V3, V4, V5, V6 vorgesehen. Das erste Schaltelement B1 und das zweite Schaltelement B2 sowie das dritte Schaltelement B3 sind jeweils als schaltbare Bremsen ausgeführt, während das vierte Schaltelement F1 und das fünfte Schaltelement F2, F2', F2" jeweils als nicht schaltbare Freiläufe ausgeführt sind.

Ferner ist unabhängig von den Ausführungen bei dem vorgeschlagenen Tretlagergetriebe vorgesehen, dass die Tretkurbelwelle Wan mit einem zweiten Element des ersten Planetenradsatzes RS1 verbunden ist, wobei die Tretkurbelwelle Wan über ein viertes Schaltelement F1 und eine zweite Welle W2 mit einem dritten Element des zweiten Planetenradsatzes RS2 verbindbar ist. Demzufolge wird im gesperrten Zustand des vierten Schaltelements F1 die Tretkurbelwelle Wan mit der zweiten Welle W2 verbunden. Die Getriebeausgangswelle Wab ist mit einem ersten Element des ersten Planetenradsatzes RS1 und mit einem ersten Element des dritten Planetenradsatzes RS3 verbunden, wobei ein drittes Element des ersten Planetenradsatzes RS1 über eine erste Welle W1 mit einem zweiten Element des zweiten Planetenradsatzes RS2 verbunden ist, wobei ein erstes Element des zweiten Planetenradsatzes RS2 über eine dritte Welle W3 mit einem zweiten Element des dritten Planetenradsatzes RS3 verbunden ist und wobei zum Verblocken des dritten Planetenradsatzes RS3 zwei Elemente des dritten Planetenradsatzes RS3 über ein fünftes Schaltelement F2, F2', F2" miteinander verbindbar sind.

Mit der vorbeschriebenen Anbindung der Elemente der Planetenradsätze RS1, RS2, RS3 und der Wellen Wan, Wab, W1, W2, W3, W4 sowie der Schaltelemente B1, B2, B3, F1, F2, F2', F2" ergibt sich eine besonders bauraumgünstige Ausführung des Tretlagergetriebes.

In den Figuren 1 bis 3 sowie 7 bis 9 sind die drei vorgesehenen Planetenradsätze RS1, RS2, RS3 jeweils als bauraumgünstige Minus-Planetenradsätze ausgeführt.

Hierbei ist vorgesehen, dass jeweils als erstes Element ein Sonnenrad SR1, SR2, SR3, als zweites Element ein Planetenradträger PT1, PT2, PT3 und als drittes Element ein Hohlrad HR1, HR2, HR3 bei den Planetenradsätzen RS1, RS2, RS3 vorgesehen sind.

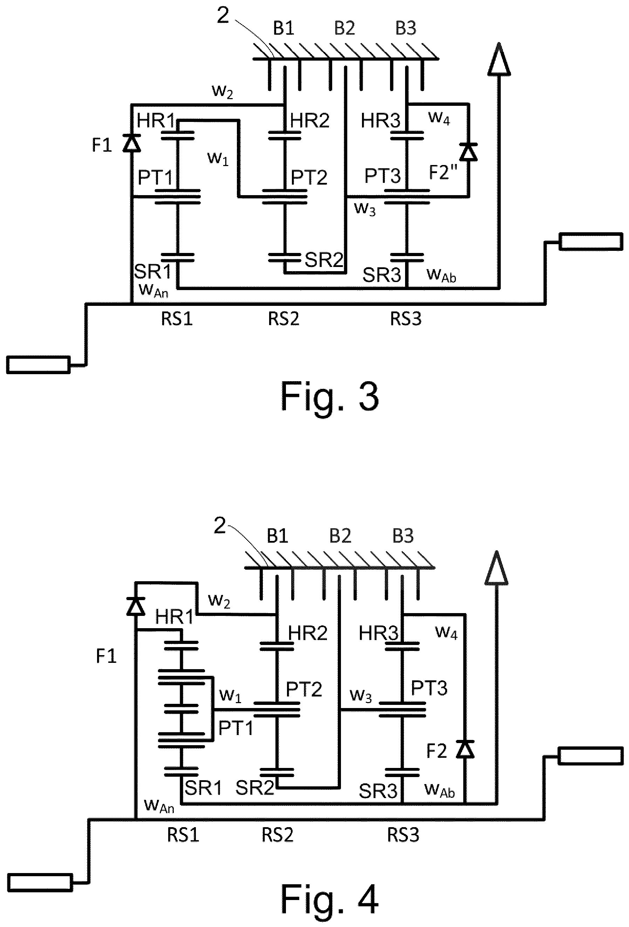

Im Detail ergibt sich hieraus, dass die Tretkurbelwelle Wan mit dem Planetenradträger PT1 des ersten Planetenradsatzes RS1 verbunden ist. Ferner ist die Tretkurbelwelle Wan über das vierte als Freilauf ausgeführte Schaltelement F1 mit dem Hohlrad HR2 des zweiten Planetenradsatzes RS2 verbindbar. Die Getriebeausgangswelle Wab ist mit dem Sonnenrad SR1 des ersten Planetenradsatzes RS1 und mit dem Sonnenrad SR3 des dritten Planetenradsatzes RS3 verbunden. Das Hohlrad HR1 des ersten Planetenradsatzes RS1 ist über die erste Welle W1 mit dem Planetenradträger PT2 des zweiten Planetenradsatzes RS2 verbunden. Ferner ist das Sonnenrad SR2 des zweiten Planetenradsatzes RS2 über die dritte Welle W3 mit dem Planetenradträger PT3 des dritten Planetenradsatzes RS3 verbunden. Zum Verblocken des dritten Planetenradsatzes RS3 ist als erste Verblockungsvariante das Sonnenrad SR3 über das fünfte als Freilauf ausgeführte Schaltelement F2 mit dem Hohlrad HR3 verbindbar oder als zweite Verblockungsvariante das Sonnenrad SR3 über das fünfte als Freilauf ausgeführte Schaltelement F2' mit dem Planetenradträger PT3 verbindbar oder als dritte Verblockungsvariante das Hohlrad HR3 über das fünfte als Freilauf ausgeführte Schaltelement F2" mit dem Planetenradträger PT3 verbindbar. In Figur 1 ist die erste Verblockungsvariante dargestellt, während in Figur 2 die zweite Verblockungsvariante und in Figur 3 die dritte Verblockungsvariante dargestellt sind.

Bei geschlossenem ersten Schaltelement B1 als Bremse ist das Hohlrad HR2 des zweiten Planetenradsatzes RS2 über die zweite Welle W2 fest mit dem Gehäuse 2 verbunden. Bei geschlossenem zweiten Schaltelement B2 als Bremse sind das Sonnenrad SR2 des zweiten Planetenradsatzes RS2 und der Planetenradträger PT3 des dritten Planetenradsatzes RS3 über die dritte Welle W3 fest mit dem Gehäuse 2 verbunden. Bei geschlossenem dritten Schaltelement B3 als Bremse ist das Hohlrad HR3 des dritten Planetenradsatzes RS3 über die vierte Welle W4 fest mit dem Gehäuse 2 verbunden. Bei gesperrten vierten Schaltelement F1 als Freilauf ist die Tretkurbelwelle Wan mit der zweiten Welle W2 verbunden. Bei gesperrten fünften Schaltelement F2 als Freilauf ist die Getriebeausgangswelle Wab mit der vierten Welle W4 verbunden und der dritte Planetenradsatz RS3 verblockt.

In den Figuren 4 bis 6 ist bei den drei vorgesehenen Planetenradsätzen RS1, RS2, RS3 immer ein Plus-Planetenradsatz vorgesehen wobei sich bei dem Plus-Planetenradsatz eine Vertauschung von Hohlradanbindung und Planetenradträgeranbindung ergibt.

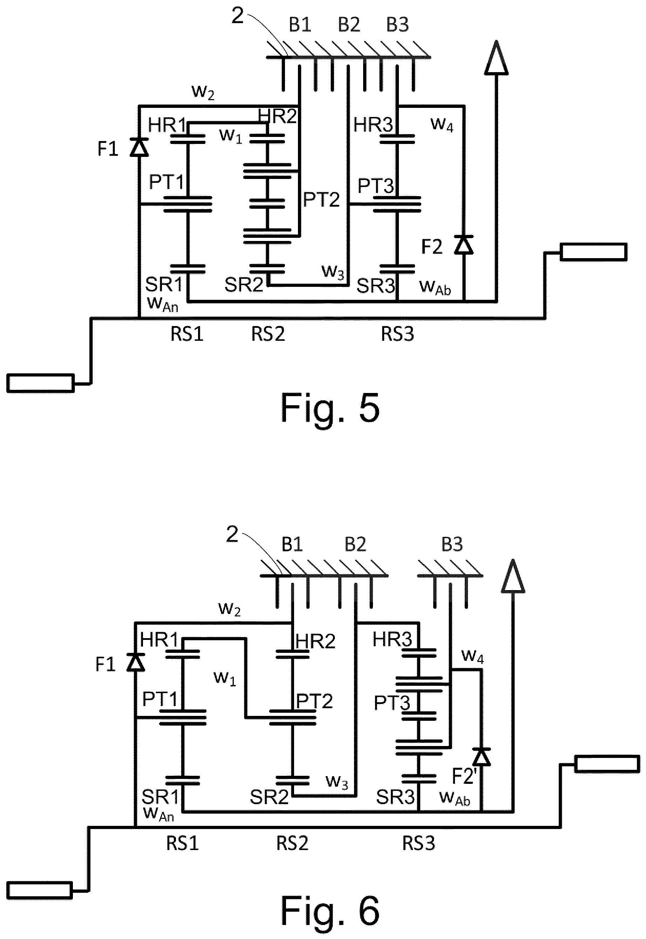

In Figur 4 ist zum Beispiel der erste Planetenradsatz RS1 als Plus-Planetenradsatz ausgeführt, während der zweite Planetenradsatz RS2 und der dritte Planetenradsatz RS3 jeweils als Minus-Planetenradsatz ausgeführt sind. In Figur 5 ist zum Beispiel der zweite Planetenradsatz RS2 als Plus-Planetenradsatz ausgeführt, während der erste Planetenradsatz RS1 und der dritte Planetenradsatz RS3 jeweils als Minus-Planetenradsatz ausgeführt sind. In Figur 6 ist zum Beispiel der dritte Planetenradsatz RS3 als Plus-Planetenradsatz ausgeführt, während der erste Planetenradsatz RS1 und der zweite Planetenradsatz RS2 jeweils als Minus-Planetenradsatz ausgeführt sind. Bei der Verwendung eines Plus-Planetenradsatzes ergibt sich eine höhere Flexibilität bei der Wahl der Übersetzungen.

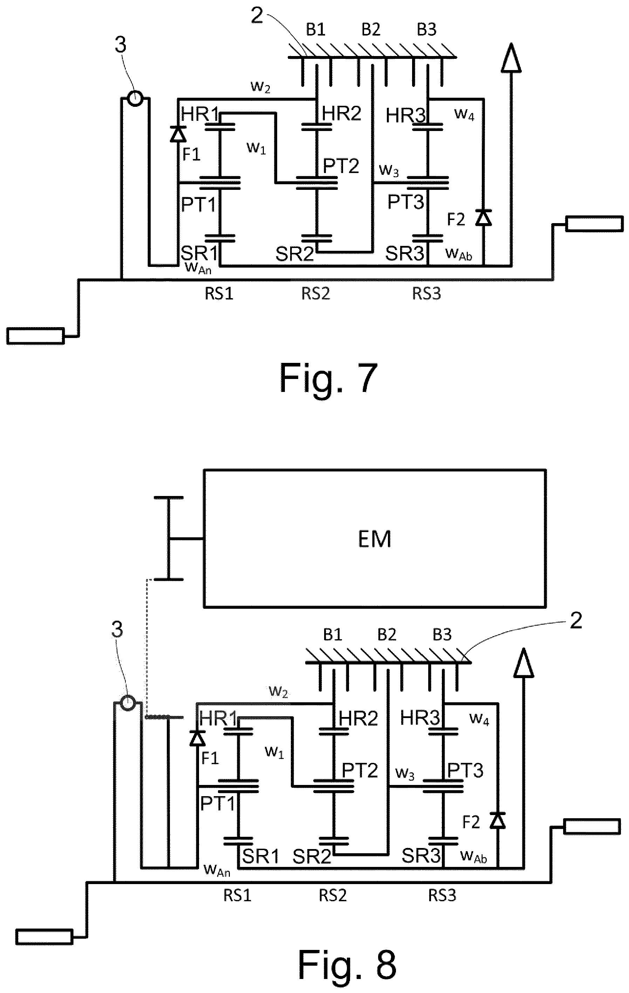

In Figur 7 ist eine Ausführung des erfindungsgemäßen Tretlagergetriebes gezeigt, bei der ein Drehmomentsensor 3 mit der Tretkurbelwelle Wan verbunden bzw. verbindbar ist. Beispielsweise kann ein scheibenförmiger Drehmomentsensor 3 am Getriebeeingang angeordnet werden. Der Drehmomentsensor 3 kann jedoch auch auf andere Art und Weise ausgeführt werden.

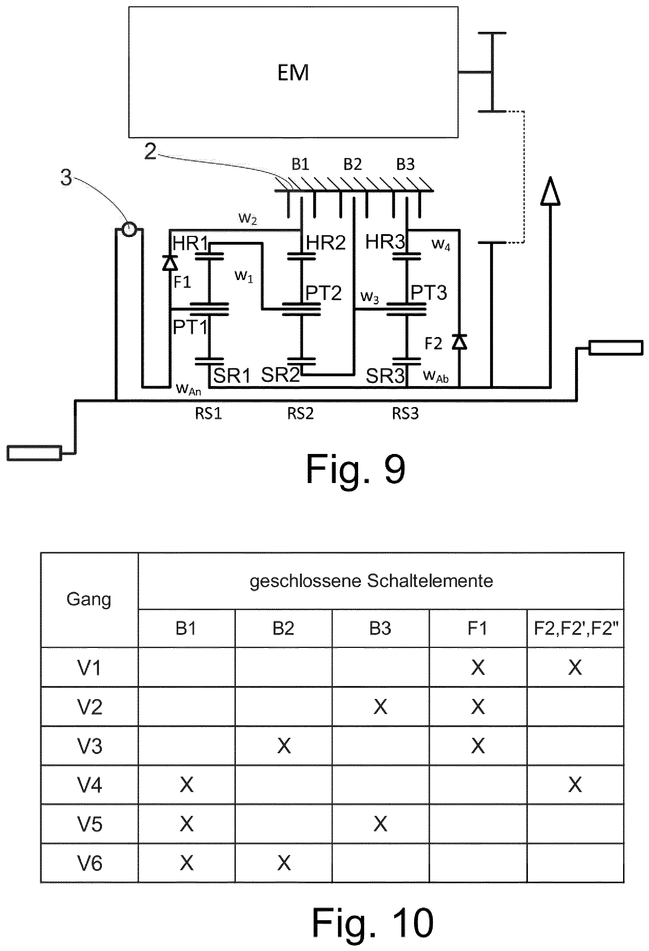

In den Figuren 8 und 9 ist jeweils eine Ausführung des erfindungsgemäßen Tretlagergetriebes mit einer zusätzlichen elektrischen Maschine EM dargestellt. Die elektrische Maschine EM kann an der Tretkurbelwelle Wan angebunden werden, wie dies in Figur 8 angedeutet ist. Es ist auch denkbar, dass die elektrische Maschine EM an der Getriebeausgangswelle Wab angebunden wird, wie dies in Figur 9 gezeigt ist. Die elektrische Maschine EM ist vorzugsweise achsparallel zur Tretkurbelwelle Wan angeordnet. Es wäre jedoch auch eine koaxiale Anordnung der elektrischen Maschine EM zur Tretkurbelwelle Wan möglich. Unabhängig, davon ist es vorteilhaft, die elektrische Maschine EM über einen Freilauf oder dergleichen anzubinden, damit beim Betrieb ohne die elektrische Maschine EM keine Verluste durch die mitdrehende elektrische Maschine EM verursacht werden.

In Figur 10 ist beispielhaft ein Schaltschema für die in den Figuren 1 bis 9 gezeigten Ausführungen des erfindungsgemäßen Tretlagergetriebes dargestellt. In dem Schaltschema sind die für den jeweiligen Gang V1, V2, V3, V4, V5, V6 verwendeten Schaltelemente B1, B2, B3, F1, F2, F2', F2" angegeben. Hierbei bedeutet ein X bei einem Freilauf F1, F2, F2', F2" als Schaltelement in dem Schaltschema, dass der Freilauf sperrt. Dies funktioniert selbsttätig ohne äußere Betätigung. Ferner bedeutet ein X bei einer Bremse B1, B2, B3 als Schaltelement in dem Schaltschema, dass die Bremse B1, B2, B3 geschlossen ist. Dies funktioniert über eine geeignete Aktuatorik.

Im Einzelnen ergibt sich aus dem Schaltschema gemäß Figur 10, dass zum Realisieren eines ersten Ganges V1 das vierte als Freilauf ausgeführte Schaltelement F1 und das fünfte als Freilauf ausgeführte Schaltelement F2, F2', F2" gesperrt sind, dass zum Realisieren eines zweiten Ganges V2 das dritte als Bremse ausgeführte Schaltelement B3 geschlossen ist und das vierte als Freilauf ausgeführte Schaltelement F1 gesperrt ist, dass zum Realisieren eines dritten Ganges V3 das zweite als Bremse ausgeführte Schaltelement B2 geschlossen ist und das vierte als Freilauf ausgeführte Schaltelement F1 gesperrt ist, dass zum Realisieren eines vierten Ganges V4 das erste als Bremse ausgeführte Schaltelement B1 geschlossen ist und das fünfte eines Freilauf ausgeführte Schaltelement F2, F2', F2" gesperrt ist, dass zum Realisieren eines fünften Ganges V5 das erste als Bremse ausgeführte Schaltelement B1 und das dritte als Bremse ausgeführte Schaltelement B3 geschlossen sind, und/oder dass zum Realisieren eines sechsten Ganges V6 das erste als Bremse ausgeführte Schaltelement B1 und das zweite als Bremse ausgeführte Schaltelement B2 geschlossen sind. Hieraus ergibt sich das zum Schalten jedes Ganges nur zwei Schaltelemente gleichzeitig verwendet werden müssen.

### Bezugszeichen

- 1: Fahrrad oder ein Pedelec
- 2: Gehäuse bzw. Tretlagergehäuse
- 3: Drehmomentsensor
- SR1: Sonnenrad des ersten Planetenradsatzes
- PT1: Planetenradträger des ersten Planetenradsatzes
- HR1: Hohlrad des ersten Planetenradsatzes
- SR2: Sonnenrad des zweiten Planetenradsatzes
- PT2: Planetenradträger des zweiten Planetenradsatzes
- HR2: Hohlrad des zweiten Planetenradsatzes
- SR3: Sonnenrad des dritten Planetenradsatzes
- PT3: Planetenradträger des dritten Planetenradsatzes
- HR3: Hohlrad des dritten Planetenradsatzes
- Wan: Tretkurbelwelle
- Wab: Getriebeausgangswelle
- EM: elektrische Maschine
- W1: erste Welle
- W2: zweite Welle
- W3: dritte Welle
- W4: vierte Welle
- RS1: erster Planetenradsatz
- RS2: zweiter Planetenradsatz
- RS3: dritter Planetenradsatz
- B1: erstes Schaltelement als Bremse
- B2: zweites Schaltelement als Bremse
- B3: drittes Schaltelement als Bremse
- F1: viertes Schaltelement als Freilauf
- F2,F2',F2": fünftes Schaltelement als Freilauf
- V1: erster Gang
- V2: zweiter Gang
- V3: dritter Gang
- V4: vierter Gang
- V5: fünfter Gang
- V6: sechster Gang

## Patentansprüche

1. Tretlagergetriebe in Planetenbauweise für ein Fahrrad oder ein Pedelec (1), mit einer Tretkurbelwelle (Wan) als Antrieb und einer Getriebeausgangswelle (Wab) als Abtrieb sowie zumindest vier weiteren Wellen (W1, W2, W3, W4), mit drei Planetenradsätzen (RS1, RS2, RS3), welche koaxial zur Tretkurbelwelle (Wan) angeordnet sind, und mit fünf Schaltelementen (B1, B2, B3, F1, F2, F2', F2") zum Realisieren von zumindest sechs Gängen (V1, V2, V3, V4, V5, V6), wobei die Tretkurbelwelle (Wan) mit einem zweiten Element des ersten Planetenradsatzes (RS1) verbunden ist, wobei ein drittes Element des ersten Planetenradsatzes (RS1) über eine erste Welle (W1) mit einem zweiten Element des zweiten Planetenradsatzes (RS2) verbunden ist, wobei ein erstes Element des zweiten Planetenradsatzes (RS2) über eine dritte Welle (W3) mit einem zweiten Element des dritten Planetenradsatzes (RS3) verbunden ist und wobei zum Verblocken des dritten Planetenradsatzes (RS3) zwei Elemente des dritten Planetenradsatzes (RS3) über ein fünftes Schaltelement (F2, F2', F2") miteinander verbindbar sind, **dadurch gekennzeichnet, dass** die Tretkurbelwelle (Wan) über ein viertes Schaltelement (F1) und eine zweite Welle (W2) mit einem dritten Element des zweiten Planetenradsatzes (RS2) verbindbar ist, und die Getriebeausgangswelle (Wab) mit einem ersten Element des ersten Planetenradsatzes (RS1) und mit einem ersten Element des dritten Planetenradsatzes (RS3) verbunden ist.

2. Tretlagergetriebe nach Anspruch 1, **dadurch gekennzeichnet, dass** bei geschlossenem ersten Schaltelement (B1) die mit dem dritten Element des zweiten Planetenradsatzes (RS2) verbundene zweite Welle (W2) mit einem Gehäuse (2) fest verbunden ist, dass bei geschlossenem zweiten Schaltelement (B2) die mit dem ersten Element des zweiten Planetenradsatzes (RS2) und mit dem zweiten Element des dritten Planetenradsatzes (RS3) verbundene dritte Welle (W3) mit dem Gehäuse (2) fest verbunden ist und dass bei geschlossenem dritten Schaltelement (B3) eine mit dem dritten Element des dritten Planetenradsatzes (RS3) verbundene vierte Welle (W4) mit dem Gehäuse (2) fest verbunden ist.

3. Tretlagergetriebe nach einem der vorangehenden Ansprüche, **dadurch gekennzeichnet, dass** das erste Schaltelement (B1), das zweite Schaltelement (B2) und das dritte Schaltelement (B3) jeweils als formschlüssige Bremse ausgeführt sind und/oder dass das vierte Schaltelement (F1) und das fünfte Schaltelement (F2, F2', F2") jeweils als Freilauf ausgeführt sind.

4. Tretlagergetriebe nach einem der vorangehenden Ansprüche, **dadurch gekennzeichnet, dass** ein Drehmomentsensor (3) mit der Tretkurbelwelle (Wan) verbunden ist.

5. Tretlagergetriebe nach einem der vorangehenden Ansprüche, **dadurch gekennzeichnet, dass** zumindest eine elektrische Maschine (EM) mit der Tretkurbelwelle (Wan) oder mit der Getriebeausgangswelle (Wab) verbunden oder verbindbar ist.

6. Tretlagergetriebe nach Anspruch 5, **dadurch gekennzeichnet, dass** die elektrische Maschine (EM) achsparallel zur Tretkurbelwelle (Wan) angeordnet ist.

7. Tretlagergetriebe nach einem der vorangehenden Ansprüche, **dadurch gekennzeichnet dass** zum Verblocken des dritten Planetenradsatzes (RS3) das erste Element des dritten Planetenradsatzes (RS3) über das fünfte Schaltelement (F2) mit dem dritten Element des dritten Planetenradsatzes (RS3) verbindbar ist.

8. Tretlagergetriebe nach einem der Ansprüche 1 bis 6, **dadurch gekennzeichnet, dass** zum Verblocken des dritten Planetenradsatzes (RS3) das erste Element des dritten Planetenradsatzes (RS3) über das fünfte Schaltelement (F2') mit dem zweiten Element des dritten Planetenradsatzes (RS3) verbindbar ist.

9. Tretlagergetriebe nach einem der Ansprüche 1 bis 6, **dadurch gekennzeichnet, dass** zum Verblocken des dritten Planetenradsatzes (RS3) das zweite Element des dritten Planetenradsatzes (RS3) über das fünfte Schaltelement (F2") mit dem dritten Element des dritten Planetenradsatzes (RS3) verbindbar ist.

10. Tretlagergetriebe nach einem der vorangehenden Ansprüche, **dadurch gekennzeichnet, dass** zumindest einer der Planetenradsätze (RS1, RS2, RS3) als Minus-Planetenradsatz ausgeführt ist.

11. Tretlagergetriebe nach Anspruch 10, **dadurch gekennzeichnet, dass** bei einem Minus-Planetenradsatz das erste Element als Sonnenrad (SR1, SR2, SR3), das zweite Element als Planetenradträger (PT1, PT2, PT3) und das dritte Element als Hohlrad (HR1, HR2, HR3) ausgeführt sind.

12. Tretlagergetriebe nach einem der vorangehenden Ansprüche, **dadurch gekennzeichnet, dass** zumindest einer der Planetenradsätze (RS1, RS2, RS3) als Plus-Planetenradsatz ausgeführt ist.

13. Tretlagergetriebe nach Anspruch 12, **dadurch gekennzeichnet, dass** bei einem Plus-Planetenradsatz das erste Element als Sonnenrad (SR1, SR2, SR3), das zweite Element als Hohlrad (HR1, HR2, HR3) und das dritte Element als Planetenradträger (PT1, PT2, PT3) ausgeführt sind.

14. Tretlagergetriebe nach einem der vorangehenden Ansprüche, **dadurch gekennzeichnet, dass** zum Realisieren eines ersten Ganges (V1) das vierte als Freilauf ausgeführte Schaltelement (F1) und das fünfte als Freilauf ausgeführte Schaltelement (F2, F2', F2") gesperrt sind, dass zum Realisieren eines zweiten Ganges (V2) das dritte als Bremse ausgeführte Schaltelement (B3) geschlossen ist und das vierte als Freilauf ausgeführte Schaltelement (F1) gesperrt ist, dass zum Realisieren eines dritten Ganges (V3) das zweite als Bremse ausgeführte Schaltelement (B2) geschlossen ist und das vierte als Freilauf ausgeführte Schaltelement (F1) gesperrt ist, dass zum Realisieren eines vierten Ganges (V4) das erste als Bremse ausgeführte Schaltelement (B1) geschlossen ist und das fünfte als Freilauf ausgeführte Schaltelement (F2, F2', F2") gesperrt ist, dass zum Realisieren eines fünften Ganges (V5) das erste als Bremse ausgeführte Schaltelement (B1) und das dritte als Bremse ausgeführte Schaltelement (B3) geschlossen sind, und/oder dass zum Realisieren eines sechsten Ganges (V6) das erste als Bremse ausgeführte Schaltelement (B1) und das zweite als Bremse ausgeführte Schaltelement (B2) geschlossen sind.

15. Fahrrad oder Pedelec (1) mit dem Tretlagergetriebe nach einem der vorangehenden Ansprüche.

## Claims

1. Planetary-type bottom bracket transmission for a bicycle or a pedelec (1), having a pedal crankshaft (Wan) as input and a transmission output shaft (Wab) as output, and at least four further shafts (W1, W2, W3, W4), having three planetary gearsets (RS1, RS2, RS3), which are arranged coaxially with respect to the pedal crankshaft (Wan), and having five shifting elements (B1, B2, B3, F1, F2, F2', F2") in order to implement at least six gears (V1, V2, V3, V4, V5, V6), wherein the pedal crankshaft (Wan) is connected to a second element of the first planetary gearset (RS1),
wherein a third element of the first planetary gearset (RS1) is connected to a second element of the second planetary gearset (RS2) by means of a first shaft (W1), wherein a first element of the second planetary gearset (RS2) is connected to a second element of the third planetary gearset (RS3) by means of a third shaft (W3) and wherein, in order to interlock the third planetary gearset (RS3), two elements of the third planetary gearset (RS3) can be connected to one another by means of a fifth shifting element (F2, F2', F2"), **characterized in that** the pedal crankshaft (Wan) can be connected to a third element of the second planetary gearset (RS2) by means of a fourth shifting element (F1) and a second shaft (W2), and the transmission output shaft (Wab) is connected to a first element of the first planetary gearset (RS1) and to a first element of the third planetary gearset (RS3).

2. Bottom bracket transmission according to Claim 1, **characterized in that**, when the first shifting element (B1) is engaged, the second shaft (W2), which is connected to the third element of the second planetary gearset (RS2), is fixedly connected to a housing (2), **in that**, when the second shifting element (B2) is engaged, the third shaft (W3), which is connected to the first element of the second planetary gearset (RS2) and to the second element of the third planetary gearset (RS3), is fixedly connected to the housing (2), and **in that**, when the third shifting element (B3) is engaged, a fourth shaft (W4), which is connected to the third element of the third planetary gearset (RS3), is fixedly connected to the housing (2).

3. Bottom bracket transmission according to either of the preceding claims, **characterized in that** the first shifting element (B1), the second shifting element (B2) and the third shifting element (B3) are each designed as a positively locking brake and/or **in that** the fourth shifting element (F1) and the fifth shifting element (F2, F2', F2") are each designed as a freewheel.

4. Bottom bracket transmission according to one of the preceding claims, **characterized in that** a torque sensor (3) is connected to the pedal crankshaft (Wan).

5. Bottom bracket transmission according to one of the preceding claims, **characterized in that** at least one electric machine (EM) is connected or can be connected to the pedal crankshaft (Wan) or to the transmission output shaft (Wab).

6. Bottom bracket transmission according to Claim 5, **characterized in that** the electric machine (EM) is arranged axially parallel to the pedal crankshaft (Wan).

7. Bottom bracket transmission according to one of the preceding claims, **characterized in that**, in order to interlock the third planetary gearset (RS3), the first element of the third planetary gearset (RS3) can be connected to the third element of the third planetary gearset (RS3) by means of the fifth shifting element (F2).

8. Bottom bracket transmission according to one of Claims 1 to 6, **characterized in that**, in order to interlock the third planetary gearset (RS3), the first element of the third planetary gearset (RS3) can be connected to the second element of the third planetary gearset (RS3) by means of the fifth shifting element (F2').

9. Bottom bracket transmission according to one of Claims 1 to 6, **characterized in that**, in order to interlock the third planetary gearset (RS3), the second element of the third planetary gearset (RS3) can be connected to the third element of the third planetary gearset (RS3) by means of the fifth shifting element (F2").

10. Bottom bracket transmission according to one of the preceding claims, **characterized in that** at least one of the planetary gearsets (RS1, RS2, RS3) is designed as a minus planetary gearset.

11. Bottom bracket transmission according to Claim 10, **characterized in that**, in the case of a minus planetary gearset, the first element is designed as a sun gear (SR1, SR2, SR3), the second element is designed as a planet carrier (PT1, PT2, PT3) and the third element is designed as a ring gear (HR1, HR2, HR3).

12. Bottom bracket transmission according to one of the preceding claims, **characterized in that** at least one of the planetary gearsets (RS1, RS2, RS3) is designed as a plus planetary gearset.

13. Bottom bracket transmission according to Claim 12, **characterized in that**, in the case of a plus planetary gearset, the first element is designed as a sun gear (SR1, SR2, SR3), the second element is designed as a ring gear (HR1, HR2, HR3) and the third element is designed as a planet carrier (PT1, PT2, PT3).

14. Bottom bracket transmission according to one of the preceding claims, **characterized in that**, in order to implement a first gear (V1), the fourth shifting element (F1) designed as a freewheel and the fifth shifting element (F2, F2', F2") designed as a freewheel are locked, **in that**, in order to implement a second gear (V2), the third shifting element (B3) designed as a brake is engaged and the fourth shifting element (F1) designed as a freewheel is locked, **in that**, in order to implement a third gear (V3), the second shifting element (B2) designed as a brake is engaged and the fourth shifting element (F1) designed as a freewheel is locked, **in that**, in order to implement a fourth gear (V4), the first shifting element (B1) designed as a brake is engaged and the fifth shifting element (F2, F2', F2") designed as a freewheel is locked, **in that**, in order to implement a fifth gear (V5), the first shifting element (B1) designed as a brake and the third shifting element (B3) designed as a brake are engaged, and/or **in that**, in order to implement a sixth gear (V6), the first shifting element (B1) designed as a brake and the second shifting element (B2) designed as a brake are engaged.

15. Bicycle or pedelec (1) having the bottom bracket transmission according to one of the preceding claims.

## Revendications

1. Entraînement de palier de pédalier en conception planétaire pour une bicyclette ou un vélo électrique (1), présentant un arbre (Wan) de manivelle de pédalier en tant qu'entraînement et un arbre de sortie (Wab) d'entraînement en tant que partie entraînée ainsi qu'au moins quatre autres arbres (W1, W2, W3, W4) présentant trois trains épicycloïdaux (RS1, RS2, RS3) qui sont agencés coaxialement à l'arbre (Wan) de manivelle de pédalier et présentant cinq éléments de commutation (B1, B2, B3, F1, F2, F2', F2") destinés à réaliser au moins six vitesses (V1, V2, V3, V4, V5, V6), l'arbre (Wan) de manivelle de pédalier étant relié à un deuxième élément du premier train épicycloïdal (RS1),
un troisième élément du premier train épicycloïdal (RS1) étant relié par l'intermédiaire d'un premier arbre (W1) à un deuxième élément du deuxième train épicycloïdal (RS2), un premier élément du deuxième train épicycloïdal (RS2) étant relié par l'intermédiaire d'un troisième arbre (W3) à un deuxième élément du troisième train épicycloïdal (RS3) et, pour le blocage du troisième train épicycloïdal (RS3), deux éléments du troisième train épicycloïdal (RS3) pouvant être reliés l'un à l'autre par l'intermédiaire d'un cinquième élément de commutation (F2, F2', F2"), **caractérisé en ce que** l'arbre (Wan) de manivelle de pédalier peut être relié par l'intermédiaire d'un quatrième élément de commutation (F1) et d'un deuxième arbre (W2) à un troisième élément du deuxième train épicycloïdal (RS2) et l'arbre de sortie (Wab) d'entraînement est relié à un premier élément du premier train épicycloïdal (RS1) et à un premier élément du troisième train épicycloïdal (RS3).

2. Entraînement de palier de pédalier selon la revendication 1, **caractérisé en ce que**, lorsque le premier élément de commutation (B1) est fermé, le deuxième arbre (W2) relié au troisième élément du deuxième train épicycloïdal (RS2) est relié de manière solidaire à un carter (2), **en ce que**, lorsque le deuxième élément de commutation (B2) est fermé, le troisième arbre (W3) relié au premier élément du deuxième train épicycloïdal (RS2) et au deuxième élément du troisième train épicycloïdal (RS3) est relié de manière solidaire au carter (2) et **en ce que**, lorsque le troisième élément de commutation (B3) est fermé, un quatrième arbre (W4) relié au troisième élément du troisième train épicycloïdal (RS3) est relié de manière solidaire au carter (2).

3. Entraînement de palier de pédalier selon l'une des revendications précédentes, **caractérisé en ce que** le premier élément de commutation (B1), le deuxième élément de commutation (B2) et le troisième élément de commutation (B3) sont réalisés respectivement en tant que frein à complémentarité de forme et/ou **en ce que** le quatrième élément de commutation (F1) et le cinquième élément de commutation (F2, F2', F2") sont réalisés respectivement en tant que roue libre.

4. Entraînement de palier de pédalier selon l'une des revendications précédentes, **caractérisé en ce qu'**un capteur de couple (3) est relié à l'arbre (Wan) de manivelle de pédalier.

5. Entraînement de palier de pédalier selon l'une des revendications précédentes, **caractérisé en ce qu'**au moins un moteur électrique (EM) est ou peut être relié à l'arbre (Wan) de manivelle de pédalier ou à l'arbre de sortie (Wab) d'entraînement.

6. Entraînement de palier de pédalier selon la revendication 5, **caractérisé en ce que** le moteur électrique (EM) est agencé avec un axe parallèle à l'arbre (Wan) de manivelle de pédalier.

7. Entraînement de palier de pédalier selon l'une des revendications précédentes, **caractérisé en ce que**, pour le blocage du troisième train épicycloïdal (RS3), le premier élément du troisième train épicycloïdal (RS3) peut être relié par l'intermédiaire du cinquième élément de commutation (F2) au troisième élément du troisième train épicycloïdal (RS3).

8. Entraînement de palier de pédalier selon l'une des revendications 1 à 6, **caractérisé en ce que**, pour le blocage du troisième train épicycloïdal (RS3), le premier élément du troisième train épicycloïdal (RS3) peut être relié par l'intermédiaire du cinquième élément de commutation (F2') au deuxième élément du troisième train épicycloïdal (RS3).

9. Entraînement de palier de pédalier selon l'une des revendications 1 à 6, **caractérisé en ce que**, pour le blocage du troisième train épicycloïdal (RS3), le deuxième élément du troisième train épicycloïdal (RS3) peut être relié par l'intermédiaire du cinquième élément de commutation (F2") au troisième élément du troisième train épicycloïdal (RS3).

10. Entraînement de palier de pédalier selon l'une des revendications précédentes, **caractérisé en ce qu'**au moins l'un des trains épicycloïdaux (RS1, RS2, RS3) est réalisé en tant que train épicycloïdal négatif.

11. Entraînement de palier de pédalier selon la revendication 10, **caractérisé en ce que**, dans le cas d'un train épicycloïdal négatif, le premier élément est réalisé en tant que roue solaire (SR1, SR2, SR3), le deuxième élément est réalisé en tant que porte-satellites (PT1, PT2, PT3) et le troisième élément réalisé en tant que roue à denture intérieure (HR1, HR2, HR3).

12. Entraînement de palier selon l'une des revendications précédentes, **caractérisé en ce qu'**au moins l'un des trains épicycloïdaux (RS1, RS2, RS3) est réalisé en tant que train épicycloïdal positif.

13. Entraînement de palier de pédalier selon la revendication 12, **caractérisé en ce que**, dans le cas d'un train épicycloïdal positif, le premier élément est réalisé en tant que roue solaire (SR1, SR2, SR3), le deuxième élément est réalisé en tant que roue à denture intérieure (PT1, PT2, PT3) et le troisième élément réalisé en tant que porte-satellites (HR1, HR2, HR3).

14. Entraînement de palier de pédalier selon l'une des revendications précédentes, **caractérisé en ce que**, pour la réalisation d'une première vitesse (V1), le quatrième élément de commutation (F1) réalisé en tant que roue libre et le cinquième élément de commutation (F2, F2', F2") réalisé en tant que roue libre sont bloqués, **en ce que**, pour la réalisation d'une deuxième vitesse (V2), le troisième élément de commutation (B3) réalisé en tant que frein est fermé et le quatrième élément de commutation (F1) réalisé en tant que roue libre est bloqué, **en ce que**, pour la réalisation d'une troisième vitesse (V3), le deuxième élément de commutation (B2) réalisé en tant que frein et le quatrième élément de commutation (F1) réalisé en tant que roue libre sont bloqués, **en ce que**, pour la réalisation d'une quatrième vitesse (V4), le premier élément de commutation (B1) réalisé en tant que frein est bloqué et le cinquième élément de commutation (F2, F2', F2") réalisé en tant que roue libre est bloqué, **en ce que**, pour la réalisation d'une cinquième vitesse (V5), le premier élément de commutation (B1) réalisé en tant que frein et le troisième élément de commutation (B3) réalisé en tant que frein sont fermés et/ou **en ce que**, pour la réalisation d'une sixième vitesse(V6), le premier élément de commutation (B1) réalisé en tant que frein et le deuxième élément de commutation (B2) réalisé en tant que frein sont fermés.

15. Bicyclette ou vélo électrique (1) présentant un entraînement de palier de pédalier selon l'une des revendications précédentes.
